# EUROPÄISCHE PATENTSCHRIFT

(11) **EP 3 844 045 B1**
(45) Veröffentlichungstag und Bekanntmachung des Hinweises auf die Patenterteilung: **19.11.2025**
(21) Anmeldenummer: 19761790.5
(22) Anmeldetag: 22.08.2019
(51) Int. Cl.: B62B 3/06

(54) **VORRICHTUNG ZUR AUFNAHME, TRANSPORT UND LAGERUNG VON MÖBELSTÜCKEN**
DEVICE FOR RECEIVING, TRANSPORTING AND STORING PIECES OF FURNITURE
DISPOSITIF DE RÉCEPTION, DE TRANSPORT ET DE STOCKAGE DE MEUBLES

(30) Priorität: 27.08.2018 DE 102018120855; 12.12.2018 DE 202018107120 U
(43) Veröffentlichungstag der Anmeldung: 07.07.2021
(73) Patentinhaber: Merkey Medikal Teknoloji Limited Sirketi, Cankaya / Ankara (TR)
(72) Erfinder: KAYDI, Ömer, 64572 Büttelborn (DE); SEN, Mehmet, 64295 Darmstadt (DE)
(74) Vertreter: WSL Patentanwälte Partnerschaft mbB
(86) Internationale Anmeldenummer: PCT/EP2019/072499
(87) Internationale Veröffentlichungsnummer: WO 2020/043595

(56) Entgegenhaltungen:
- DE-U1- 202010 008 432
- DE-U1- 202016 102 863
- DE-U1- 202016 103 991
- US-A- 2 706 057
- US-A- 3 902 613
- US-A- 4 954 038
- US-A- 5 988 597
- US-B1- 8 328 029

## Beschreibung

Die Erfindung betrifft eine Vorrichtung zur Aufnahme, Transport und Lagerung von Möbelstücken mit einem verfahrbaren Traggestell und mit einer an dem verfahrbaren Traggestell festgelegten Hebeeinrichtung, wobei mit der Hebeeinrichtung ein erstes Möbelstück angehoben werden kann, so dass ein zweites Möbelstück unter dem mit der Hebeeinrichtung angehobenen ersten Möbelstück angeordnet werden kann, wobei das verfahrbare Traggestell eine Arretierungseinrichtung zum Arretieren des zweiten Möbelstücks an oder in dem verfahrbaren Traggestell aufweist.

In DE 20 2016 103 991 Ul ist ein verfahrbarer Wagen gezeigt und beschrieben, in welchem übereinander angeordnet mehrere ausziehbare Böden bzw. Gitterböden zur Aufnahme von hochreinen Produkten wie beispielsweise Medizinprodukte oder mikrosystemtechnische Produkte angeordnet werden können. Mit dem verfahrbaren Wagen können die darin aufbewahrten Produkte transportiert werden, ohne dass eine Verunreinigung der Produkte befürchtet werden muss. Derartige verfahrbare Wägen sind jedoch nicht für die Aufnahme von mehreren Möbelstücken vorgesehen oder geeignet.

Aus der Praxis ist es bekannt, dass Möbelstücke wie beispielsweise Stühle oder Tische, die nicht dauerhaft an einem Ort benötigt werden, in oder auf Transporteinrichtungen transportiert und gegebenenfalls gelagert werden, bis die Möbelstücke wieder benötigt und an dem dafür vorgesehenen Ort aufgestellt werden. Ein Beispiel hierfür sind stapelbare Stühle in einer Veranstaltungshalle, die je nach Bedarf für die jeweilige Veranstaltung in der Veranstaltungshalle aufgestellt und anschließend wieder abgebaut und in einem Lagerraum gelagert werden, um die Veranstaltungshalle anderweitig nutzen zu können. Die Stühle und Tische können beispielsweise mit einer Sackkarre schnell und einfach transportiert werden.

Es sind auch verfahrbare Transportwagen bekannt, auf denen aufeinander gestapelte Stühle oder Tische gelagert und verräumt werden können. Eine raumsparende Anordnung und Lagerung mehrerer Möbelstücke auf einer Sackkarre oder auf einem derartigen Transportwagen setzt jedoch voraus, dass die betreffenden Möbelstücke stapelbar sind. Sehr schwere oder nicht stapelbare Möbelstücke können nicht raumsparend mit den aus der Praxis bekannten Transportwagen gelagert und verräumt werden.

Aus der Praxis sind auch verfahrbare Werkstattkräne bekannt, mit welchen sehr schwere Objekte wie Automotoren oder gegebenenfalls auch sehr schwere Möbelstücke angehoben werden könnten. Eine solche Vorrichtung ist beispielsweise in US 5,988,597 A gezeigt und beschrieben. Derartige Werkstattkräne sind jedoch nicht dafür geeignet, mehr als ein sehr schweres Möbelstück übereinander anzuordnen und zu transportieren.

In US 8,328,029 Bl sowie in US 4,954,038 A ist jeweils eine Vorrichtung gezeigt und beschrieben, die zur Aufnahme von zwei Schneemobilen vorgesehen und geeignet ist, die übereinander angeordnet werden können. Dabei weist die Vorrichtung ein Rahmengestell mit einer Hebeeinrichtung auf, mit deren Hilfe ein erstes Schneemobil ergriffen und angehoben werden kann, sodass ein zweites Schneemobil darunter mit der Vorrichtung aufgenommen werden kann. Eine Variante dieser Vorrichtung weist auch Rollen auf, sodass die Vorrichtung zum Verräumen der Schneemobile innerhalb eines Lagers bewegt werden kann.

In US 3,902,613 A ist ein Trailer gezeigt und beschrieben, der zur Aufnahme von zwei Schneemobilen übereinander angeordnet vorgesehen und geeignet ist, um diese zu transportieren. Über eine Heckklappe und eine zum hinteren Ende des Trailers hin absenkbare Rampe wird ein erstes Schneemobil eingeführt und die Rampe über einen Seilzugmechanismus in die Waagerechte gebracht, so dass das erste Schneemobil durch eine rechteckige Öffnung im Dach des Gehäuses des Trailers herausragt. Ein zweites Schneemobil wird über die Heckklappe in den Raum unter dem auf der Rampe stehenden ersten Schneemobil eingebracht.

Als eine Aufgabe der vorliegenden Erfindung wird es daher angesehen, eine Vorrichtung so auszugestalten, dass mit dieser Vorrichtung mindestens zwei gegebenenfalls schwere Möbelstücke schnell und einfach übereinander angeordnet und transportiert werden können, und dass mit Hilfe der Vorrichtung eine Behandlung der darin aufgenommenen Möbelstücke mit gegebenenfalls umweltgefährdenden Mitteln ermöglicht wird.

Diese Aufgabe wird erfindungsmäßig durch eine Vorrichtung gemäß Anspruch 1 gelöst, welche eine einen für die darin aufnehmbaren Möbelstücke vorgesehenen Nutzraum in der Vorrichtung abdichtend umgebende Umhüllung aufweist, so dass ein in die Vorrichtung eingebrachtes Desinfektionsmittel innerhalb der Umhüllung verbleibt, und wobei die Vorrichtung eine Desinfektionsmittelbereitstellungseinrichtung aufweist, wobei die Desinfektionsmittelbereitstellungseinrichtung das Desinfektionsmittel in die Umhüllung der Vorrichtung einbringen kann, so dass die in der Vorrichtung angeordneten Möbelstücke mit dem Desinfektionsmittel desinfiziert werden können. Dadurch kann die erfindungsgemäße Vorrichtung dazu verwendet werden, beispielsweise mit krankheitserregenden Keimen verseuchte oder mit Schädlingen
befallene Möbelstücke innerhalb der Vorrichtung zu desinfizieren oder zu dekontaminieren. Das Desinfektionsmittel kann ein Gas, ein Nebel oder ein Rauch sein, wobei als Nebel ein Gemisch aus einem Gas und einer Flüssigkeit und als Rauch ein Gemisch aus einer festen Phase und einer gasförmigen Phase bezeichnet wird. Das Desinfektionsmittel kann beispielsweise ein Nebel aus Luft/Wasserstoffperoxid, Luft/Peroxyessigsäure oder aus einer Mischung daraus sein. In vorteilhafter Weise weist die für eine Erzeugung des Nebels verwendete Flüssigkeit Silberionen auf. Das Desinfektionsmittel kann auch ein Gas wie Ozon, Formaldehyd, oder Suifurylfluorid sein. Es ist auch möglich und erfindungsgemäß optional vorgesehen, dass das Desinfektionsmittel ein Rauch aus Luft/Pyrethrum ist. Der Rauch kann auch ein durch Verbrennung organischer Materie wie etwa von Holz entstandenes Rauchgas sein.

Um beispielsweise die strengen Hygienevorschriften in Krankenhäusern einhalten zu können ist es vorteilhaft, über ein Säubern und Abwischen von Oberflächen des Krankenhausbettes hinaus das Krankenhausbett mit einem geeigneten Desinfektionsmittel zu desinfizieren. Im Bereich der Möbelrestauration können beispielsweise bei aus Holz gefertigten und von Holzschädlingen befallenen Möbelstücken die in dem Holz des Möbelstücks verbleibenden Holzschädlinge mit dem Desinfektionsmittel bekämpft werden.

Eine Desinfizierung erfolgt bei größeren Krankenhäusern oder Restaurationsbetrieben zumeist in einer zentralen Desinfizierungseinrichtung, so dass die Desinfizierung einzelner Krankenhausbetten oder Möbelstücke mit einem hohen logistischen Aufwand verbunden ist. Die Krankenhausbetten müssen von der jeweiligen Station, in welcher die Krankenhausbetten verwendet werden, zu der zentralen Desinfizierungseinrichtung gebracht und dort über einen längeren Zeitraum gelagert sowie desinfiziert werden. Die Desinfizierungseinrichtung muss bereitgehalten und unterhalten werden. Die Transporte der Krankenhausbetten sind mit einem erheblichen personellen Aufwand verbunden, zumal bei einem häufigen Bettenwechsel ein Krankenhausbett nach kurzer Zeit erneut desinfiziert werden muss.

Im Gegensatz dazu erlaubt die mit der Umhüllung ausgestaltete Vorrichtung das dezentrale Desinfizieren des Krankenhausbettes nahe an dem Ort der tatsächlichen Nutzung des Krankenhausbettes, also beispielsweise in einem ungenutzten Raum oder auf einem Flurbereich innerhalb der jeweiligen Station.

Die Umhüllung dichtet das von der Umhüllung umhüllte Nutzvolumen, welches während der Desinfizierung mit dem Desinfektionsmittel beaufschlagt werden kann, gegenüber der Umgebung ab. Dadurch können auch möglicherweise umweltschädigende Desinfektionsmittel eingesetzt werden, ohne dass gesonderte Schutzmaßnahmen für die Umgebung notwendig sind. Weiterhin kann bei einem an die Größe der aufzunehmenden Möbelstücke, bzw. Krankenhausbetten angepassten Nutzvolumen eine für die Desinfizierung benötigte Menge an Desinfektionsmittel verringert werden, insbesondere im Vergleich zu den ansonsten üblichen Räumen, die als zentrale Desinfizierungseinrichtung in Krankenhäusern üblicherweise verwendet werden.

Eine Abdichtung der Umhüllung kann an das jeweils vorgesehene Desinfektionsmittel angepasst sein. Beispielsweise kann eine in der Praxis ausreichende Abdichtung der Umhüllung für ein nebelförmiges und nicht umweltgefährdendes Desinfektionsmittel durch eine konstruktiv einfacher ausgestaltete Umhüllung gewährleistet werden, verglichen mit der Abdichtung für ein gasförmiges und gegebenenfalls toxisches Desinfektionsmittel.

Die Umhüllung kann aus einem flexiblen Material, beispielsweise aus einer Kunststofffolie gefertigt sein, wobei die Umhüllung das Traggestell von allen Seiten umgibt und während der Dauer eines Desinfizierungsvorgangs auf dem Untergrund klebend und ausreichend abdichtend festgelegt wird. Es ist auch möglich und erfindungsgemäß optional vorgesehen, dass die Umhüllung formstabile Hüllenseitenwandelemente und ein formstabiles Hüllendachelement aufweist, die desinfektionsmitteldicht miteinander verbunden sind und das Traggestell und die darin angeordneten Möbelstücke umgeben. Um eine Abdichtung zum Boden hin zu bewirken können von den Hüllenseitenwandelementen für die Dekontamination auf den Boden aufliegend verlagerbare Abdichtelemente vorgesehen sein, wobei die jeweiligen Abdichtelemente auch an Kontaktflächen zu benachbart angeordneten Abdichtelementen angrenzender Hüllenseitenwandelemente dichtend ausgebildet und angeordnet sind.

Es ist auch denkbar, dass bei einer alternativ möglichen Ausgestaltung der Umhüllung die Hüllenseitenwandelemente mit dem Hüllendachelement ein zum Boden hin offenes, formstabiles Umhüllungsgehäuse bilden, welches für die Dauer der Desinfizierung zum Boden hin verlagert werden kann, um dicht auf dem Boden aufzustehen und zusammen mit dem Boden den Nutzraum in der Umhüllung dicht zu umgeben.

Es ist ebenfalls möglich und im Hinblick auf eine möglichst dichte und zuverlässige Umhüllung des Nutzraums denkbar, dass die Umhüllung darüber hinaus ein Hüllenbodenelement aufweist, welches das Umhüllungsgehäuse zum Boden hin begrenzt und abdichtet. Das Hüllenbodenelement kann mit einem geringen Abstand über dem Boden angeordnet sein und sollte lediglich ein Verfahren der Vorrichtung ermöglichen. Das zu desinfizierende Möbelstück oder Krankenhausbett muss dann lediglich auf das unmittelbar über dem Boden angeordnete Hüllenbodenelement aufgerollt oder aufgeschoben werden, wobei gegebenenfalls ausziehbare Rampen oder Schienen zu Hilfe genommen werden können.

Um das Desinfektionsmittel in die Umhüllung einzubringen ist vorgesehen, dass die Vorrichtung eine Desinfektionsmittelbereitstellungseinrichtung aufweist, wobei die Desinfektionsmittelbereitstellungseinrichtung das Desinfektionsmittel in die Umhüllung der Vorrichtung einbringen kann, so dass die in der Vorrichtung angeordneten Möbelstücke mit dem Desinfektionsmittel desinfiziert werden können. Die Desinfektionsmittelbereitstellungseinrichtung kann beispielsweise eine Vernebelungsanlage, eine Gaseinleitungsanlage, oder eine Rauchgaserzeugungsanlage sein. Die Desinfektionsmittelbereitstellungseinrichtung kann innerhalb der Umhüllung oder außerhalb der Umhüllung angeordnet und vorzugsweise an dem Traggestell befestigt sein.

Gemäß einer vorteilhaften Umsetzung des Erfindungsgedankens ist vorgesehen, dass die Vorrichtung eine Anschlusseinrichtung aufweist, wobei von außerhalb der Umhüllung durch die Anschlusseinrichtung hindurch das Desinfektionsmittel in die Vorrichtung eingebracht werden kann. Bei einer derartigen Ausgestaltung der Vorrichtung kann das von der außerhalb der Umhüllung angeordneten Desinfektionsmittelbereitstellungseinrichtung bereitgestellte Desinfektionsmittel durch die Anschlusseinrichtung in die Umhüllung eingebracht werden. Es ist auch möglich und erfindungsgemäß optional vorgesehen, dass eine von der Vorrichtung separate Desinfektionsmittelbereitstellungseinrichtung über die Anschlusseinrichtung an die Vorrichtung angeschlossen wird.

Dadurch kann in vorteilhafter Weise beispielsweise eine transportable Desinfektionsmittelbereitstellungseinrichtung bei Bedarf mit der Anschlusseinrichtung verbunden und zur Desinfizierung von in der Umhüllung angeordneten Möbelstücken verwendet werden.

Die Anschlusseinrichtung kann auch ein von außerhalb der Umhüllung zugängliches Anschlusselement aufweisen, an welchem ein Desinfektionsmittelschlauch der Desinfektionsmittelbereitstellungseinrichtung kraft- und gegebenenfalls formschlüssig gasdicht angeschlossen werden kann.

In einer weiteren vorteilhaften Umsetzung des Erfindungsgedankens ist vorgesehen, dass die Vorrichtung eine Kontrolleinrichtung aufweist, wobei mit der Kontrolleinrichtung Möbelinformationen der in der Vorrichtung angeordneten Möbelstücke aufnehmbar sind. Die Möbelinformationen können beispielsweise eine dem jeweiligen Möbelstück zugeordnete Möbelidentifikationsnummer oder eine Zeitdauer seit der letzten Dekontamination umfassen. Aus der Zeitdauer seit der letzten Dekontamination kann ein Nutzer bei vorgegebenen Desinfizierungsintervallen vollautomatisch auf den Zeitpunkt der nächsten für das Möbelstück anstehenden Desinfizierung hingewiesen werden.

Die Möbelinformationen wie die Möbelidentifikationsnummer kann beispielweise von dem Nutzer manuell mit einem Eingabeelement wie einem berührungssensitiven Punkt-Matrix-Anzeigeelement eingebbar sein. Es ist auch möglich und erfindungsgemäß optional vorgesehen, dass die Möbelinformationen von dem Nutzer elektro-optisch erfassbar sind. Beispielsweise kann ein an dem Möbelstück angebrachter Barcode mit einem Barcode-Lesegerät erfassbar sein. Alternativ können die Möbelinformationen auch automatisiert berührungslos über das Auslesen eines Transponders des jeweiligen Möbelstücks erfassbar sein. Die Möbelinformationen können dem Nutzer auf einer Anzeigeeinrichtung wie dem berührungssensitiven Punkt-Matrix-Anzeigeelement anzeigbar sein.

In vorteilhafter Weise weist die Kontrolleinrichtung eine Kommunikationseinrichtung auf, die eine vorzugsweise drahtlose Kommunikation mit externen Kommunikationsgeräten ermöglicht, um mit der Kontrolleinrichtung erfassten Informationen einschließlich der Möbelinformationen mit den externen Kommunikationsgeräten austauschen zu können. Die Kontrolleinrichtung kann sich optional mit Hilfe des Kommunikationselement datenübertragend mit einer zentralen Logistikeinrichtung verbinden, so dass die Kontrolleinrichtung der Logistikeinrichtung bei Bedarf oder in vorgegebenen Zeitintervallen die Möbelinformationen sowie weitere relevante Informationen übermitteln kann. Derart kann beispielsweise an der zentralen Logistikeinrichtung auf die Möbelidentifikationsnummer oder auf die Zeitdauer seit der letzten Dekontamination der in der Vorrichtung aufgenommenen Möbelstücke zugegriffen werden. Wenn die Vorrichtung für einen Einsatz an häufig wechselnden Orten vorgesehen ist kann die Vorrichtung auch ein GPS-Modul oder einen anderen Positionssensor oder Positionsinformationensender aufweisen und den aktuellen Standort der Vorrichtung übermitteln.

Die datenübertragende Kommunikation mit externen Kommunikationsgeräten oder mit der zentralen Logistikeinrichtung kann beispielsweise über ein drahtloses lokales Netzwerk, über eine Datenübertragung zwischen Geräten über kurze Distanz per Funktechnik, oder über eine Mobilfunkverbindung erfolgen..

Das verfahrbare Traggestell weist zweckmäßigerweise einen möglichst großen nutzbaren Innenraum auf, in welchem ein Möbelstück so angeordnet werden kann, dass das verfahrbare Traggestell das Möbelstück umgibt. Durch eine derartige Ausgestaltung der Vorrichtung kann schnell und einfach ein erstes Möbelstück innerhalb des Traggestells angeordnet und mit der Hebeeinrichtung angehoben werden, so dass ein zweites Möbelstück unter dem ersten Möbelstück angeordnet werden kann. Für diese Anordnung der beiden Möbelstücke ist demzufolge lediglich eine Grundfläche erforderlich, die einem der beiden Möbelstücke bzw. dem größeren der beiden Möbelstücke entspricht. Weist das zweite Möbelstück Möbeltransportrollen auf, so kann das zweite Möbelstück durch das Arretieren in oder an dem Traggestell gemeinsam mit dem angehobenen ersten Möbelstück mit der erfindungsgemäßen Vorrichtung verfahren und gelagert werden, was die Effizienz bei dem Transport der Möbelstücke erhöht.

Die Vorrichtung ermöglicht das Lagern mehrerer Möbelstücke übereinander und damit einhergehend die Lagerung mehrerer Möbelstücke auf einer vergleichsweise kleinen Grundfläche, ohne dass aufwändige bauliche Maßnahmen in einem Lagerraum erforderlich werden. Das verfahrbare Traggestell ist zweckmäßigerweise an die Aufnahme großer Lasten bzw. für die Aufnahme von schweren Möbelstücken vorgesehen und entsprechend ausgestaltet. Die Hebeeinrichtung kann so ausgestaltet und eingerichtet sein, dass auch schwere oder sperrige Möbelstücke von einem einzelnen Benutzer mit der Hebeeinrichtung erfasst und angehoben werden können.

Die erfindungsgemäße Vorrichtung kann eine konstruktiv einfache Ausgestaltung des verfahrbaren Traggestells, der Hebeeinrichtung und der Arretierungseinrichtung aufweisen. Das Traggestell kann beispielsweise aus zusammengeschweißten oder zusammengefügten bzw. miteinander verbundenen Stahlprofilen gefertigt sein. Die Vorrichtung kann seitlich angeordnete Griffe aufweisen, um die Vorrichtung leicht verfahren zu können.

Bei einer vorteilhaften Umsetzung des Erfindungsgedankens ist vorgesehen, dass das Traggestell einen auf einer Vorderseite offenen Fußrahmen aufweist, so dass die Vorrichtung auf der Vorderseite die Möbelstücke aufnehmen kann. Im Fußbereich weist das Traggestell nur auf einer der Vorderseite gegenüberliegenden Rückseite und auf angrenzenden Seiten Gestellelemente auf, während ein von dem Traggestell umgebener Innenraum von der Vorderseite aus frei zugänglich ist, so dass das Möbelstück einfach in das Traggestell eingeschoben werden kann oder gegebenenfalls auch das Traggestell einfach über das Möbelstück geschoben werden kann. An dem Fußrahmen können weitere Gestell- oder Rahmenelemente ausgebildet oder festgelegt sein, um beispielsweise die maximal aufnehmbare mechanische Belastung des Traggestells zu erhöhen oder einen Schutz vor Beschädigungen für ein innerhalb des Traggestells angeordnetes Möbelstück zu verbessern.

Gemäß einer vorteilhaften Ausgestaltung des Erfindungsgedankens ist vorgesehen, dass die Arretierungseinrichtung von einer Aufnahmeposition, in welcher die Möbelstücke auf der Vorderseite aufgenommen werden können, in eine Arretierposition verlagerbar ist, in welcher eine auf der Vorderseite des verfahrbaren Traggestells ausgebildete Aufnahmeöffnung begrenzt wird. Durch die Begrenzung der Aufnahmeöffnung wird verhindert, dass ein in dem Innenraum des Traggestells befindliches Möbelstück durch die Aufnahmeöffnung wieder herausbewegt werden kann, sodass auch bei einer Verlagerung des verfahrbaren Traggestells das darin angeordnete Möbelstück mitverlagert wird. Vorzugsweise ist die Arretierungseinrichtung als ein an der Vorderseite des Traggestells angelenkter Sperrriegel ausgebildet. Die Arretierungseinrichtung kann auch als eine Sperrkette ausgebildet sein. Es ist auch möglich und optional vorgesehen, dass das der Fußrahmen in der Arretierposition nach innen vorspringende Klemmelemente ausbildet.

Um das Traggestell verfahrbar auszugestalten ist vorzugsweise vorgesehen, dass das Traggestell an dem Fußrahmen angeordnete Transportrollen, vorzugsweise schwenkbare Transportrollen, aufweist. Es ist auch möglich und erfindungsgemäß optional vorgesehen, dass mindestens zwei der Transportrollen elektrisch antreibbar sind.

Um bei dem Möbelstück mit schwenkbaren Möbeltransportrollen eine mögliche Kollision der Transportrollen mit den Möbeltransportrollen zu vermeiden ist gemäß einer Ausgestaltung des Erfindungsgedankens in vorteilhafter Weise vorgesehen, dass die Vorrichtung Aufnahmeschienen aufweist, in welche das Möbelstück eingeschoben werden kann. Die Aufnahmeschienen können unmittelbar über einer AufStandsfläche des verfahrbaren Traggestells beispielsweise an den Seiten des Fußrahmens festgelegt sein. Vorteilhafterweise sind die Aufnahmeschienen nur geringfügig oberhalb der AufStandsfläche angeordnet und gegebenenfalls mit abgeschrägten Einfahrrampen versehen, um ein Einschieben des Möbelstücks zu erleichtern. Es kann weiterhin vorgesehen sein, dass die Aufnahmeschienen an dem Fußrahmen höhenverstellbar bzw. neigbar gelagert sind.

Um die mechanische Stabilität des Traggestells zu erhöhen ist vorzugsweise vorgesehen, dass das Traggestell einen umlaufenden Kopfrahmen aufweist. An dem Kopfrahmen können vorteilhafterweise weitere Elemente angefügt sein, die für das Anheben eines Möbelstücks benötigt werden, oder die einem Schutz der in dem Traggestellt aufgenommenen Möbelstücke vor Umgebungseinflüssen oder Beschädigungen dienen können.

Einer vorteilhaften Ausgestaltung der erfindungsgemäßen Vorrichtung zufolge ist vorgesehen, dass die Hebeeinrichtung eine Gruppe von mindestens zwei an gegenüberliegenden Seiten des Traggestells angeordnete Eingriffselemente aufweist, wobei die Gruppe von Eingriffselementen mit dem ersten Möbelstück in Eingriff gebracht werden kann, und wobei jedes Eingriffselement der Gruppe von Eingriffselementen über mechanische Betätigungsmittel mit einer Antriebseinrichtung in Wirkverbindung steht, so dass durch einen Betrieb der Antriebseinrichtung das erste Möbelstück von der Hebeeinrichtung angehoben werden kann.

Bei einer derartigen Ausgestaltung des Erfindungsgedankens kann das in dem Traggestell angeordnete erste Möbelstück schnell und einfach von der Hebeeinrichtung ergriffen und angehoben werden. Die mindestens zwei Eingriffselemente können beispielsweise Haken oder winkelförmige Auflagerelemente sein. Die mechanischen Betätigungsmittel können beispielsweise Zahnstangen oder Gewindestangen sein. Wenn die Hebeeinrichtung einen Seilzugmechanismus aufweist können die Betätigungsmittel Seile, Ketten oder Bänder sein. Die Antriebseinrichtung kann beispielsweise ein Elektromotor sein. Es ist auch möglich und erfindungsgemäß optional vorgesehen, dass die Betätigungsmittel und die Antriebseinrichtung eine Einheit darstellen und als Linearantriebe wie beispielsweise elektrische Linearantriebe, als Pneumatikzylinder oder als Hydraulikzylinder ausgebildet sind.

Die mindestens zwei Eingriffselemente können bei bestimmungsgemäßer Verwendung auf einer annähernd gleichen Höhe angeordnet sein. Die mindestens zwei Eingriffselemente können auch unabhängig voneinander in ihrer Höhe einstellbar sein, um unregelmäßig geformte Möbelstücke aufnehmen zu können. Eine derartige Ausgestaltung der Hebeeinrichtung kann durch die Verwendung von den seilbasierten Betriebsmitteln beispielsweise mit einer Reibschnalle, einer Seilklemmung oder einer Seilumlenkung ermöglicht werden. Insbesondere bei einer Verwendung von gesonderten Linearantrieben für jedes Eingriffselement ist eine unabhängige Höheneinstellung der jeweiligen Eingriffselemente zueinander schnell und einfach durchführbar.

Vorzugsweise kann die eine Antriebseinrichtung oder gegebenenfalls können die mehreren Antriebseinrichtungen der Vorrichtung autark betrieben werden. Es ist auch möglich und erfindungsgemäß optional vorgesehen, dass die Antriebseinrichtung mit einer an einem Ort der Nutzung vorrätig gehaltenen Energiequelle beispielsweise über ein elektrisches Netzkabel oder eine Druckluftleitung mit Energie versorgt wird.

In vorteilhafter Weise weist die Vorrichtung eine vorzugsweise von der Vorderseite der Vorrichtung aus bedienbare Kontrolleinheit auf, mit welcher die Hebeeinrichtung bedienbar ist. Mit der Kontrolleinheit können eventuell auch die elektrisch antreibbaren Transportrollen bedient werden.

Um die Hebeeinrichtung einfach und kostengünstig herstellen und möglichst wartungsfrei betreiben zu können ist vorgesehen, dass die Betätigungsmittel der Hebeeinrichtung Seilelemente, vorzugsweise Seilzugeinrichtungen, sind. Bei einer Verwendung von Seilzügen mit Umlenkrollen kann die Antriebseinrichtung im Bereich des Fußrahmens angeordnet werden, wodurch ein Schwerpunkt der Vorrichtung abgesenkt und ein mögliches Kipprisiko der Vorrichtung verringert wird.

Bei einer vorteilhaften Umsetzung des Erfindungsgedankens ist vorgesehen, dass die Hebeeinrichtung mindestens zwei seitlich an dem Traggestell angeordnete und jeweils einem Eingriffselement zugeordnete Führungsschienen aufweist, wobei jedes Eingriffselement durch die zugeordnete Führungsschiene zwangsgeführt ist, wobei die mindestens zwei Eingriffselemente mit der Antriebseinrichtung in Wirkverbindung stehen. Die in den Führungsschienen geführten Eingriffselemente können mit den Seilelementen oder mit den Seilzugeinrichtungen betätigt werden. Es ist auch möglich und erfindungsgemäß optional vorgesehen, dass die in den Führungsschienen geführten Eingriffselemente direkt von elektrischen Linearantrieben, Pneumatikzylindern oder Hydraulikzylindern angetrieben sind.

Um die Aufnahme der Möbelstücke zu erleichtern ist vorgesehen, dass die mindestens zwei Eingriffselemente an der dazugehörigen Führungsschiene verschwenkbar gelagert sind. Vorzugsweise sind derartige Eingriffselemente als von der Führungsschiene vorspringende winkelförmige Auflagerelemente ausgebildet. Die Eingriffselemente können federbelastet ausgestaltet sein, so dass diese ohne eine auf dem jeweiligen Eingriffselement aufliegende Last nach oben hin verschwenkt sind. Vorzugsweise weisen die verschwenkbaren Eingriffselemente ein Widerlager auf, so dass diese nicht beliebig weit nach unten verschwenkbar sind und beispielsweise in einer waagrechten Ausrichtung fixiert werden können, um ein Möbelstück ergreifen und anheben zu können.

Um die Vorrichtung für eine Verwendung mit mehreren Möbelstücken auszugestalten ist vorteilhafterweise vorgesehen, dass die Vorrichtung mindestens zwei unabhängig voneinander betreibbare Gruppen von mindestens zwei Eingriffselementen aufweist, so dass die Vorrichtung mindestens zwei Möbelstücke anheben kann. Bei einer derartigen Ausgestaltung der Vorrichtung sind die mindestens zwei Gruppen von Eingriffselementen vorteilhafterweise mit nur einer Antriebseinrichtung unabhängig voneinander betreibbar. In einer alternativen Ausgestaltung des Erfindungsgedankens sind die mindestens zwei Gruppen von Eingriffselementen mit der dazugehörigen Antriebseinrichtung betreibbar. Insbesondere im Fall der Verwendung von den Linearantrieben kann jedes einzelne Eingriffselement von einer dazugehörigen Antriebseinrichtung betreibbar sein. Bei einer derartigen Ausgestaltung des Erfindungsgedankens sind die zu der Gruppe dazugehörigen mindestens zwei Eingriffselemente gemeinsam betreibbar.

Um die Vorrichtung autark betreibbar auszugestalten ist vorteilhafterweise vorgesehen, dass die Vorrichtung einen Energiespeicher für den Betrieb der Antriebseinrichtung aufweist. Derart kann die Antriebseinrichtung beispielsweise einen Akkumulator oder Drucklufttank aufweisen.

Um die in der Vorrichtung transportierbaren und gegebenenfalls lagerbarer Möbelstücke vor Umwelteinflüssen zu schützen ist vorzugsweise vorgesehen, dass die Vorrichtung eine die Vorrichtung bzw. das verfahrbare Traggestellt bereichsweise umgebende Außenverkleidung aufweist. Es ist darüber hinaus möglich und erfindungsgemäß optional vorgesehen, dass die auf der Vorderseite der Vorrichtung ausgebildete Aufnahmeöffnung beispielsweise mit seitlich an dem Traggestell angelenkten Flügeltüren oder mit einem Rollo verschließbar ausgestaltet ist.

Vorzugsweise ist vorgesehen, dass die Vorrichtung für eine Verwendung für Krankenhausbetten angepasst ist. Die Vorrichtung kann derart ausgeführt sein, dass das Traggestell hinsichtlich seiner Abmessungen und der maximal zulässigen Traglast für die Aufnahme von Krankenhausbetten und die Hebeeinrichtung für das Anheben von Krankenhausbetten ausgelegt ist. Vorteilhafterweise ist die Vorrichtung schnell und einfach zu reinigen, um auch strengen Hygienevorschriften von Krankenhäusern zu genügen. Es ist darüber hinaus möglich und erfindungsgemäß optional vorgesehen, dass die Vorrichtung keine leicht brennbaren Komponenten aufweist oder mit zusätzlichen Brandschutzmitteln ausgestattet ist, um den Brandschutzbestimmungen der Krankenhäuser zu entsprechen.

Um die Vorrichtung mit zwei darin aufgenommenen Krankenbetten innerhalb der Räumlichkeiten eines Krankenhauses möglichst ungehindert transportieren und in oftmals im Keller angeordneten Lagerräumen lagern zu können ist gemäß einer vorteilhaften Ausgestaltung des Erfindungsgedankens vorgesehen, dass die Vorrichtung eine maximale Höhe von 1,9 Metern, eine maximale Breite von 1,1 Meter und eine maximale Länge von 2,3 Metern nicht überschreitet.

Nachfolgend werden einige Ausführungsbeispiele des Erfindungsgedankens näher erläutert, die in der Zeichnung dargestellt sind. Es zeigen:
Figuren 1 bis 3 jeweils eine schematische Darstellung verschiedener Ausführungsformen einer erfindungsgemäßen Vorrichtung,
Figur 4 eine schematische Darstellung einer Umhüllung der Vorrichtung mit einer an die Umhüllung angeschlossenen Desinfektionsmittelbereitstellungseinrichtung, und
Figur 5 eine schematische Darstellung einer Detailansicht der in Figur 4 gezeigten Vorrichtung.

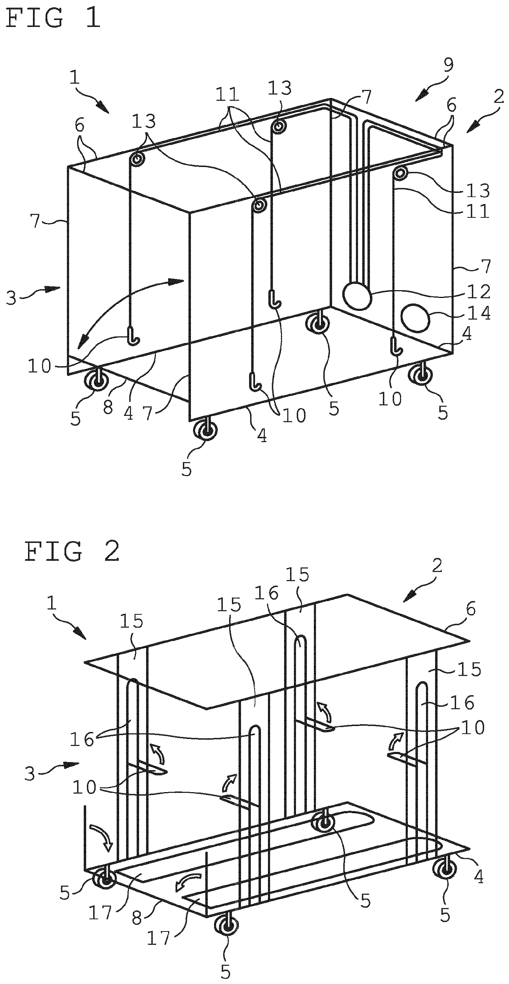

In Figur 1 ist eine erste Ausführungsform einer erfindungsgemäßen Vorrichtung 1 dargestellt. Die Vorrichtung 1 weist ein verfahrbares Traggestell 2 auf. Das Traggestell 2 weist einen auf einer Vorderseite 3 der Vorrichtung 1 offenen Fußrahmen 4 auf, der nahe einer Aufstandsfläche des Traggestells 2 auf einem Untergrund angeordnet ist. An dem Fußrahmen 4 sind Transportrollen 5 festgelegt, mit welchen das Traggestell 2 auf dem Untergrund verfahren werden kann.

Das Traggestell 2 weist weiterhin einen in einem Abstand zu der Aufstandsfläche auf dem Untergrund angeordneten Kopfrahmen 6 auf. Der Fußrahmen 4 und der Kopfrahmen 5 sind mit vertikalen Streben 7 miteinander verbunden. An einer der längs einer Kante an der Vorderseite 3 angeordneten Streben 7 ist eine Arretiervorrichtung 8 angeordnet, welche in der hier dargestellten Ausführungsform als verschwenkbarer Riegel ausgeführt ist. Der Riegel kann nach oben verschwenkt und an die Strebe 7 angelegt werden, um die Vorderseite 3 freizugeben und ein Möbelstück in den von dem Traggestell 2 umgebenen Innenraum einbringen zu können. Der Riegel kann auch in eine waagrechte Lage verschwenkt und mit seinem freien Ende an einer gegenüberliegend angeordneten Strebe 7 festgelegt werden, um ein in dem Innenraum des Traggestells 2 befindliches Möbelstück darin zurückzuhalten.

An dem Traggestell 2 ist eine Hebeeinrichtung 9 festgelegt. Die Hebeeinrichtung 9 weist vier Eingriffselemente 10 auf, welche hier als Haken ausgebildet sind. Die Hebeeinrichtung 9 weist weiterhin Betätigungselemente 11 auf, über welche die Eingriffselemente 10 mit einer Antriebseinrichtung 12 in Wirkverbindung stehen. Die Betätigungselemente 11 sind bei dem exemplarisch dargestellten Ausführungsbeispiel Seilzugeinrichtungen mit Seilelementen und Umlenkrollen 13.

Die Antriebseinheit 12 ist ein Elektromotor. Um die hier dargestellte Ausführungsform der Vorrichtung 1 unabhängig von einem dauerhaften Anschluss an ein Stromnetz nutzen zu können weist die Vorrichtung 1 einen Energiespeicher 14 auf, der als wiederaufladbarer Akkumulator ausgestaltet ist.

In Figur 2 ist eine zweite Ausführungsform der Vorrichtung 1 dargestellt. Bei dieser Ausführungsform der Vorrichtung 1 sind der Kopfrahmen 6 und der Fußrahmen 4 mit vier seitlichen Flächenelementen 15 miteinander verbunden. Die seitlichen Flächenelemente 15 weisen jeweils eine Führungsschiene 16 auf. In jeder der Führungsschienen 16 ist jeweils ein Eingriffselement 10 zwangsgeführt. Die Eingriffselemente 10 sind an der zugeordneten Führungsschiene 16 verschwenkbar gelagerte Auflagerelemente. Die Verriegelungseinrichtung 8 weist bei diesem Ausführungsbeispiel zwei verschwenkbare Riegel auf.

Die in Figur 2 dargestellte Vorrichtung 1 weist zudem unmittelbar über dem Boden angeordnete Aufnahmeschienen 17 auf. Ein Möbelstück, beispielsweise ein selbst auf Rollen verfahrbares Krankenbett, kann in die Aufnahmeschienen 17 eingeschoben werden und dadurch beabstandet von dem Untergrund in der Vorrichtung 1 gelagert und zusammen mit dem Traggestell 2 verschoben werden.

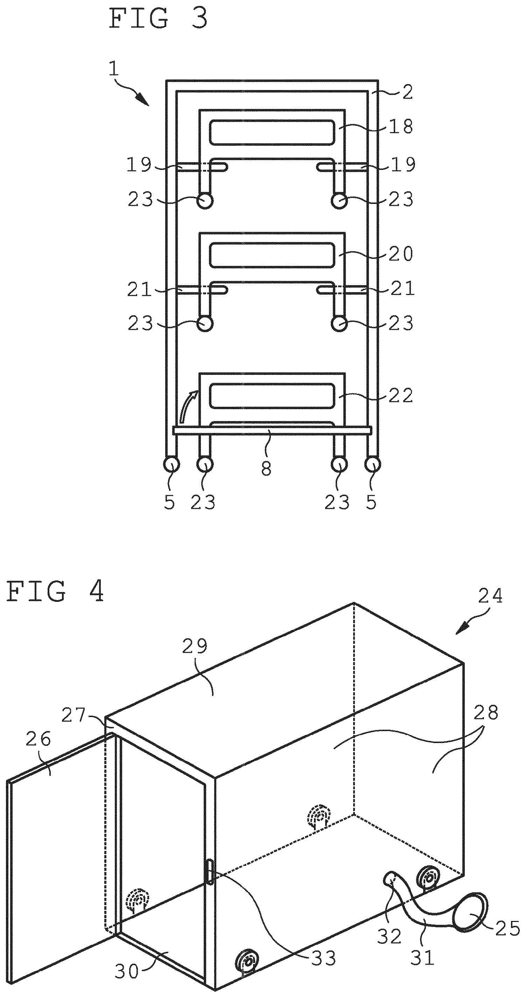

In Figur 3 ist exemplarisch eine dritte Ausführungsform der Vorrichtung 1 in einer Frontalansicht dargestellt. In der Vorrichtung 1 sind ein erstes Möbelstück 18 von einer ersten Gruppe 19 von Eingriffselementen 10 und ein zweites Möbelstück 20 von einer zweiten Gruppe 21 von den Eingriffselementen 10 übereinander innerhalb des Traggestells 2 jeweils angehoben angeordnet. Unter dem zweiten Möbelstück 20 ist ein drittes Möbelstück 22 angeordnet. Die drei Möbelstücke 18, 20, 22 sind hier Krankenhausbetten. Die Möbelstücke 18, 20, 22 weisen Möbeltransportrollen 23 auf. Das dritte Möbelstück 22 ist in dem Transportgestell 2 mit einer Arretierungseinrichtung 8 arretiert, so dass mit der Vorrichtung 1 die zwei in der Vorrichtung 1 aufgenommenen Möbelstücke 18, 20 und das dritte Möbelstück 22 gleichzeitig transportiert werden können.

In Figur 4 ist eine schematische Ansicht einer ein Nutzvolumen der Vorrichtung 1 abdichtenden Umhüllung 24 mit einer an die Umhüllung 24 angeschlossenen Desinfektionsmittelbereitstellungseinrichtung 25 dargestellt. Der besseren Übersicht halber ist das von der Umhüllung 24 umgebende Traggestell 2 mit der an dem Traggestell 2 festgelegten Hebeeinrichtung 9 in Figur 4 nicht dargestellt, wobei die Umhüllung 24 das Traggestell 2 und die darin aufgenommenen Möbelstücke 18, 20, 22 umgibt. Die Umhüllung 24 umfasst ein für die Aufnahme der Möbelstücke 18, 20, 22 offen stehendes Hüllentürelement 26. Darüber hinaus umfasst die Umhüllung 24 einen Hüllentürelementrahmen 27, drei Hüllenseitenwandelemente 28, ein Hüllendachelement 29, und ein Hüllenbodenelement 30. Nach der Aufnahme der Möbelstücke 18, 20, 22 bei dem geschlossenen Hüllentürelement 26 dichtet die Umhüllung 24 die Vorrichtung 1 gegenüber der Umgebung ab. Die Umhüllung 24 kann für die Aufnahme der Möbelstücke 18, 20, 22 mit dem Hüllenbodenelement 30 bis auf den Boden absenkbar ausgebildet sein.

Die Desinfektionsmittelbereitstellungseinrichtung 25 ist über einen Desinfektionsmittelschlauch 31 an der Anschlusseinrichtung 32 der Vorrichtung 1 angeschlossen, wobei die Anschlusseinrichtung 32 eine verschließbare Öffnung in der Umhüllung 24 bildet, durch welche das von der Desinfektionsmittelbereitstellungseinrichtung 25 zugeführte Desinfektionsmittel in den von der Umhüllung 24 umgebenen Nutzraum eingebracht werden kann. In der hier dargestellten Ausführungsform der Vorrichtung 1 ist die Desinfektionsmittelbereitstellungseinrichtung 25 als eine transportable Vernebelungsanlage separat von der Vorrichtung 1 ausgeführt. Für eine Dekontamination der Möbelstücke 18, 20, 22 kann mit der Desinfektionsmittelbereitstellungseinrichtung 25 ein Desinfektionsmittel in die Umhüllung 24 der Vorrichtung 1 eingebracht werden. An einem berührungssensitiven Punkt-Matrix-Anzeigeelement einer Kontrolleinrichtung 33 kann ein Nutzer eine Möbelidentifikationsnummer für das jeweilige in der Vorrichtung 1 aufzunehmende Möbelstück 18, 20, 22 eingeben.

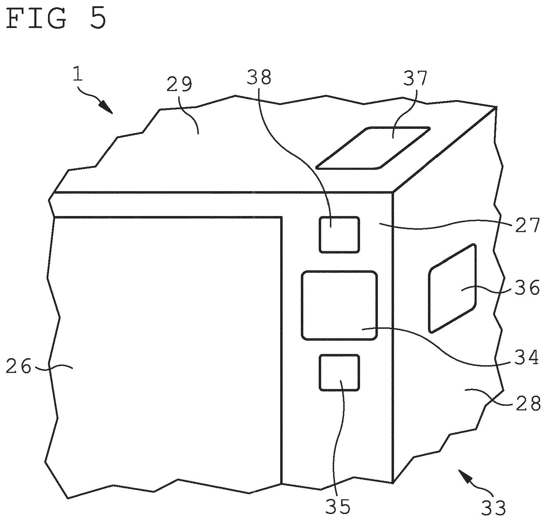

In Figur 5 ist eine schematische Detailansicht der in Figur 4 dargestellten Ausführungsform der Vorrichtung 1 dargestellt. Die Kontrolleinrichtung 33 weist ein Anzeigeelement 34 und eine Bedieneinrichtung 35 auf. Das Anzeigeelement 34 ist in der hier dargestellten Ausführungsform der Vorrichtung 1 als Punkt-Matrix-Display und die Bedieneinrichtung 35 als Tastatur ausgeführt. Die Kontrolleinrichtung 33 umfasst ein Lesegerät 36 für ein berührungsloses Auslesen der auf einem Transponders der Möbelstücke 18, 20, 22 gespeicherten Möbelidentifikationsnummer. Auf dem Anzeigeelement 34 können beispielsweise die Möbelidentifikationsnummer und eine Position der in der Vorrichtung 1 aufgenommenen Möbelstücke 18, 20, 22 anzeigbar sein. Darüber hinaus können auf dem Anzeigeelement 34 eine Dauer und eine Restzeit einer innerhalb der Vorrichtung 1 ablaufenden Desinfektion anzeigbar sein. Die Kontrolleinrichtung 33 umfasst auch ein Positionsbestimmungsmodul 37. Das Positionsbestimmungsmodul kann beispielsweise eine Empfangseinrichtung für eine satellitenbasierte Positionsbestimmung wie ein Globales Positionsbestimmungssystem (GPS) sein. Das Positionsbestimmungsmodul kann auch eine Empfangseinrichtung für ein lokales Netzwerk sein, wobei die Position der Vorrichtung durch Ermittlung eines Abstandes und gegebenenfalls eines Winkels zu einer Vielzahl von ortsfesten Basisstationen des lokalen Netzwerks mit einem bekannten Standort der jeweiligen Basisstation sein kann.

Die Kontrolleinrichtung 33 umfasst darüber hinaus eine Kommunikationseinrichtung 38, mit welcher die Kontrolleinrichtung 33 mit externen Kommunikationsgeräten oder mit einer zentralen Logistikeinrichtung drahtlos kommunizieren kann. Die Kommunikationseinrichtung 38 kann beispielsweise datenübertragend mit den externen Kommunikationsgeräten oder mit der zentralen Logistikeinrichtung über eine Mobilfunkverbindung erfolgen. Beispielsweise sind eine Position der Vorrichtung 1 oder
die Möbelidentifikationsnummer der von der Vorrichtung 1 aufgenommenen Möbelstücke 18, 20, 22 von der Vorrichtung 1 an die externen Kommunikationsgeräte oder die zentrale Logistikeinrichtung übermittelbar. Derart kann beispielsweise mit der Vorrichtung 1 eine zentrale Verwaltung der Krankenhausbetten erleichtert sein.

### BEZUGSZEICHENLISTE

- 1: Vorrichtung
- 2: Traggestell
- 3: Vorderseite
- 4: Fußrahmen
- 5: Transportrollen
- 6: Kopfrahmen
- 7: Streben
- 8: Arretierungseinrichtung
- 9: Hebeeinrichtung
- 10: Eingriffselemente
- 11: Betätigungselemente
- 12: Antriebeinrichtung
- 13: Umlenkrollen
- 14: Energiespeicher
- 15: Flächenelemente
- 16: Führungsschienen
- 17: Aufnahmeschienen
- 18: Erstes Möbelstück
- 19: Erste Gruppe von Eingriffselementen
- 20: Zweites Möbelstück
- 21: Zweite Gruppe von Eingriffselementen
- 22: Drittes Möbelstück
- 23: Möbeltransportrollen
- 24: Umhüllung
- 25: Desinfektionsmittelbereitstellungseinrichtung 26 Hüllentürelement
- 27: Hüllentürelementrahmen
- 28: Hüllenseitenwandelemente
- 29: Hüllendachelement
- 30: Hüllenbodenelement
- 31: Desinfektionsmittelsohlauch
- 32: Anschlusseinrichtung
- 33: Kontrolleinrichtung
- 34: Anzeigeelement
- 35: Bedieneinrichtung
- 36: Lesegerät
- 37: Positionsbestimmungsmodul
- 38: Kommunikationseinrichtung Vorrichtung

## Patentansprüche

1. Vorrichtung (1) zur Aufnahme, Transport und Lagerung von Möbelstücken (18, 20, 22) mit einem verfahrbaren Traggestell (2) und mit einer an dem verfahrbaren Traggestell festgelegten Hebeeinrichtung (9), wobei mit der Hebeeinrichtung (9) ein erstes Möbelstück (18) angehoben werden kann, so dass ein zweites Möbelstück (20) unter dem mit der Hebeeinrichtung (9) angehobenen ersten Möbelstück (18) angeordnet werden kann,
und wobei das verfahrbare Traggestell (2) eine Arretierungseinrichtung (8) zum Arretieren des zweiten Möbelstücks (20) an oder in dem verfahrbaren Traggestell (2) aufweist,
wobei die Vorrichtung (1) eine einen für die darin aufnehmbaren Möbelstücke (18, 20, 22) vorgesehenen Nutzraum in der Vorrichtung (1) abdichtende Umhüllung (24) aufweist, so dass ein in die Vorrichtung (1) eingebrachtes Desinfektionsmittel innerhalb der Umhüllung (24) verbleibt, **dadurch gekennzeichnet, dass** die Vorrichtung (1) eine Desinfektionsmittelbereitstellungseinrichtung (25 ) aufweist, wobei die Desinfektionsmittelbereitstellungseinrichtung (25) das Desinfektionsmittel in die Umhüllung (24) der Vorrichtung (1) einbringen kann, so dass die in der Vorrichtung (1) angeordneten Möbelstücke (18, 20, 22) mit dem Desinfektionsmittel desinfiziert werden können.

2. Vorrichtung (1) nach Anspruch 1, **dadurch gekennzeichnet, dass** die Vorrichtung (1) eine Anschlusseinrichtung (32) aufweist, wobei von außerhalb der Umhüllung (24) durch die Anschlusseinrichtung (32) das Desinfektionsmittel in die Vorrichtung (1) eingebracht werden kann.

3. Vorrichtung (1) nach einem der vorangehenden Ansprüche, **dadurch gekennzeichnet, dass** die Vorrichtung (1) eine Kontrolleinrichtung (33) aufweist, wobei
mit der Kontrolleinrichtung (33) Möbelinformationen der in der Vorrichtung (1) angeordneten Möbelstücke (18, 20, 22) aufnehmbar sind.

4. Vorrichtung (1) nach einem der vorangehenden Ansprüche, **dadurch gekennzeichnet, dass** das Traggestell (2) einen auf einer Vorderseite (3) offenen Fußrahmen (4) aufweist, so dass die Vorrichtung (1) auf der Vorderseite (3) des Fußrahmens (4) die Möbelstücke (18, 20, 22) aufnehmen kann.

5. Vorrichtung (1) nach einem der vorangehenden Ansprüche, **dadurch gekennzeichnet, dass** die Arretierungseinrichtung (8) von einer Aufnahmeposition, in welcher die Möbelstücke auf der Vorderseite (3) der Vorrichtung (1) aufgenommen werden können in eine Arretierposition verlagerbar ist, in welcher eine auf der Vorderseite (3) des verfahrbaren Traggestells (2) ausgebildete Aufnahmeöffnung begrenzt wird.

6. Vorrichtung (1) nach einem der vorangehenden Ansprüche wenn abhängig von Anspruch 4, **dadurch gekennzeichnet,**
**dass** das Traggestell (2) an dem Fußrahmen (4) angeordnete Transportrollen (5), vorzugsweise schwenkbare Transportrollen (5), aufweist.

7. Vorrichtung (1) nach einem der vorangehenden Ansprüche, **dadurch gekennzeichnet, dass** das Traggestell (2) Aufnahmeschienen (17) aufweist, in welche das Möbelstück (18, 20, 22) eingeschoben werden kann.

8. Vorrichtung (1) nach einem der vorangehenden Ansprüche, **dadurch gekennzeichnet, dass** das Traggestell (2) einen umlaufenden Kopfrahmen (6) aufweist.

9. Vorrichtung (1) nach einem der vorangehenden Ansprüche, **dadurch gekennzeichnet, dass** die Hebeeinrichtung (9) eine Gruppe (19, 21) von mindestens zwei an gegenüberliegenden Seiten des Traggestells (2) angeordneten Eingriffselementen (10) aufweist, wobei die Gruppe (19, 21) von Eingriffselementen (10) mit dem ersten Möbelstück (18) in Eingriff gebracht werden kann, und wobei jedes Eingriffselement (10) der Gruppe (19, 21) von Eingriffselementen (10) über mechanische Betätigungsmittel (11) mit einer Antriebseinrichtung (12) in Wirkverbindung steht, so dass durch einen Betrieb der Antriebseinrichtung (12) das erste Möbelstück (18) von der Hebeeinrichtung (9) angehoben werden kann.

10. Vorrichtung (1) nach Anspruch 9,
**dadurch gekennzeichnet,**
**dass** die mechanischen Betätigungsmittel (11) der Hebeeinrichtung (9) Seilelemente, vorzugsweise Seilzugeinrichtungen, sind.

11. Vorrichtung (1) nach einem der Ansprüche 9 oder 10,
**dadurch gekennzeichnet,**
**dass** die Hebeeinrichtung (9) mindestens zwei seitlich an dem Traggestell (2) angeordnete und jeweils einem Eingriffselement (10) zugeordnete Führungsschienen (16) aufweist, wobei jedes Eingriffselement (10) durch die zugeordnete Führungsschiene (16) zwangsgeführt ist, wobei die mindestens zwei Eingriffselemente (10) mit der Antriebseinrichtung (12) in Wirkverbindung stehen.

12. Vorrichtung (1) nach Anspruch 11,
**dadurch gekennzeichnet, dass** die mindestens zwei Eingriffselemente (10) an der dazugehörigen Führungsschiene (16) verschwenkbar gelagert sind.

13. Vorrichtung (1) nach einem der Ansprüche 9 bis 12,
**dadurch gekennzeichnet, dass** die Vorrichtung (2) mindestens zwei unabhängig voneinander betreibbare Gruppen (19, 21) von jeweils mindestens zwei Eingriffselementen (10) aufweist, so dass die Vorrichtung (1) mindestens zwei Möbelstücke (18, 20, 22) anheben kann.

14. Vorrichtung (1) nach einem der Ansprüche 9 bis 13,
**dadurch gekennzeichnet, dass** die Vorrichtung (1) einen Energiespeicher (14) für den Betrieb der Antriebseinrichtung (12) aufweist.

15. Vorrichtung (1) nach einem der vorangehenden Ansprüche, **dadurch gekennzeichnet, dass** die Vorrichtung (1) eine die Vorrichtung (1) bereichsweise umgebende Außenverkleidung aufweist.

16. Vorrichtung (1) nach einem der vorangehenden Ansprüche, **dadurch gekennzeichnet, dass** die Vorrichtung (1) für eine Verwendung für Krankenhausbetten angepasst ist.

17. Vorrichtung (1) nach einem der vorangehenden Ansprüche, **dadurch gekennzeichnet, dass** die Vorrichtung (1) eine maximale Höhe von 1,9 Metern, eine maximale Breite von 1,1 Meter und eine maximale Länge von 2,3 Metern nicht überschreitet.

## Claims

1. Device (1) for receiving, transporting and storing pieces of furniture (18, 20, 22), comprising a movable support rack (2) and comprising a lifting means (9) fastened to the movable support rack, wherein it is possible to lift a first piece of furniture (18) using the lifting apparatus (9) such that a second piece of furniture (20) can be arranged below the first piece of furniture (18) that has been lifted by the lifting apparatus (9),
and wherein the movable support rack (2) comprises a locking apparatus (8) for locking the second piece of furniture (20) on or in the movable support rack (2),
and wherein the device (1) comprises a cover (24) that seals the usable space in the device (1) intended for the pieces of furniture (18, 20, 22) that can be received therein, such that a disinfectant introduced into the device (1) remains within the cover (24), **characterised in that** the device (1) comprises a disinfectant supply means (25), wherein the disinfectant supply means (25) is able to introduce the disinfectant into the cover (24) of the device (1) such that the pieces of furniture (18, 20, 22) arranged in the device (1) can be disinfected by the disinfectant.

2. Device (1) according to claim 1, **characterised in that** the device (1) comprises a connection means (32), wherein it possible to introduce the disinfectant into the device (1) from outside the cover (24) through the connection means (32).

3. Device (1) according to any of the preceding claims, **characterised in that** the device (1) comprises a monitoring means (33), wherein it is possible to record furniture information regarding the pieces of furniture (18, 20, 22) arranged in the device (1) by means of the monitoring means (33).

4. Device (1) according to any of the preceding claims, **characterised in that** the support rack (2) comprises a base frame (4) that is open at a front side (3) such that the device (1) can receive the pieces of furniture (18, 20, 22) at the front side (3) of the base frame (4).

5. Device (1) according to any of the preceding claims, **characterised in that** the locking means (8) can be moved from a receiving position, in which the pieces of furniture can be received at the front side (3) of the device (1), into a locking position, in which a receiving opening provided at the front side (3) of the movable support rack (2) is restricted.

6. Device (1) according to any of the preceding claims, if dependent on claim 4, **characterised in that** the support rack (2) comprises transport rollers (5), preferably pivotable transport rollers (5), arranged on the base frame (4).

7. Device (1) according to any of the preceding claims, **characterised in that** the support rack (2) comprises receiving rails (17), into which the piece of furniture (18, 20, 22) can be slid.

8. Device (1) according to any of the preceding claims, **characterised in that** the support rack (2) comprises a peripheral top frame (6).

9. Device (1) according to any of the preceding claims, **characterised in that** the lifting means (9) comprises a group (19, 21) of at least two engagement elements (10) arranged on opposite sides of the support rack (2), wherein it is possible to bring the group (19, 21) of engagement elements (10) into engagement with the first piece of furniture (18), and wherein each engagement element (10) in the group (19, 21) of engagement elements (10) is operatively connected to a drive means (12) by mechanical actuation means (11), such that the first piece of furniture (18) can be lifted by the lifting means (9) by operating the drive means (12).

10. Device (1) according to claim 9, **characterised in that** the mechanical actuation means (11) of the lifting means (9) are cable elements, preferably cable-hoist means.

11. Device (1) according to one of claims 9 or 10, **characterised in that** the lifting means (9) comprises at least two guide rails (16) that are arranged on the sides of the support rack (2) and are each assigned to an engagement element (10), wherein each engagement element (10) is forcibly guided by the assigned guide rail (16), wherein the at least two engagement elements (10) are operatively connected to the drive means (12).

12. Device (1) according to claim 11, **characterised in that** the at least two engagement elements (10) are pivotally mounted on the associated guide rail (16).

13. Device (1) according to one of claims 9 to 12, **characterised in that** the device (2) comprises at least two separately operable groups (19, 21) of at least two engagement elements (10) each, such that the device (1) can lift at least two pieces of furniture (18, 20, 22).

14. Device (1) according to one of claims 9 to 13, **characterised in that** the device (1) comprises an energy storage device (14) for operating the drive means (12).

15. Device (1) according to any of the preceding claims, **characterised in that** the device (1) comprises outer cladding that surrounds the device (1) in regions.

16. Device (1) according to any of the preceding claims, **characterised in that** the device (1) is adapted for use for hospital beds.

17. Device (1) according to any of the preceding claims, **characterised in that** the device (1) does not exceed a maximum height of 1.9 metres, a maximum width of 1.1 metres and a maximum length of 2.3 metres.

## Revendications

1. Dispositif (1) destiné à la réception, au transport et au stockage de meubles (18, 20, 22), comprenant un bâti porteur (2) déplaçable et un dispositif de levage (9) fixé au bâti porteur déplaçable, un premier meuble (18) pouvant être soulevé avec le dispositif de levage (9), si bien qu'un deuxième meuble (20) puisse être placé en-dessous du premier meuble (18) soulevé avec le dispositif de levage (9),
et le bâti porteur (2) déplaçable comprenant un dispositif d'arrêt (8) destiné à arrêter le deuxième meuble (20) sur ou dans le bâti porteur (2) déplaçable,
le dispositif (1) comprenant une enveloppe (24) rendant étanche un volume utile dans le dispositif (1) prévu pour les meubles (18, 20, 22) pouvant y être mis, si bien qu'un désinfectant introduit dans le dispositif (1) reste à l'intérieur de l'enveloppe (24), **caractérisé en ce que** le dispositif (1) comprend un dispositif de mise à disposition de désinfectant (25), le dispositif de mise à disposition de désinfectant (25) pouvant introduire le désinfectant dans l'enveloppe (24) du dispositif (1), si bien que les meubles (18, 20, 22) disposés dans le dispositif (1) puissent être désinfectés avec le désinfectant.

2. Dispositif (1) selon la revendication 1, **caractérisé en ce que** le dispositif (1) comprend un dispositif de raccordement (32), le désinfectant pouvant être introduit dans le dispositif (1), à partir de l'extérieur de l'enveloppe (24), à travers le dispositif de raccordement (32).

3. Dispositif (1) selon l'une des revendications précédentes, **caractérisé en ce que** le dispositif (1) comprend un dispositif de contrôle (33), des informations de meuble concernant les meubles (18, 20, 22) disposés dans le dispositif (1) pouvant être saisies par le dispositif de contrôle (33).

4. Dispositif (1) selon l'une des revendications précédentes, **caractérisé en ce que** le bâti porteur (2) comprend un socle (4) ouvert sur un côté avant (3), si bien que le dispositif (1) puisse recevoir les meubles (18, 20, 22) sur le côté avant (3) du socle (4).

5. Dispositif (1) selon l'une des revendications précédentes, **caractérisé en ce que** le dispositif d'arrêt (8) peut être déplacé d'une position de réception dans laquelle les meubles peuvent être reçus sur le côté avant (3) du dispositif (1), à une position d'arrêt dans laquelle une ouverture de réception, formée sur le côté avant (3) du bâti porteur (2), est délimitée.

6. Dispositif (1) selon l'une des revendications précédentes, si dépendante de la revendication 4, **caractérisé en ce que** le bâti porteur (2) comprend des rouleaux de transport (5), de préférence des rouleaux de transport pivotants (5), disposés au socle (4).

7. Dispositif (1) selon l'une des revendications précédentes, **caractérisé en ce que** le bâti porteur (2) comprend des rails de réception (17) dans lesquels le meuble (18, 20, 22) peut être glissé.

8. Dispositif (1) selon l'une des revendications précédentes, **caractérisé en ce que** le bâti porteur (2) comprend un cadre de tête (6) périphérique.

9. Dispositif (1) selon l'une des revendications précédentes, **caractérisé en ce que** le dispositif de levage (9) comprend un groupe (19, 21) d'au moins deux éléments de saisie (10) disposés sur des côtés opposés du bâti porteur (2), le groupe (19, 21) d'éléments de saisie (10) pouvant être engagé avec le premier meuble (18), et chaque élément de saisie (10) du groupe (19 , 21) d'éléments de saisie (10) étant en liaison active, par le biais de moyens d'actionnement mécaniques (11), avec un dispositif d'entraînement (12), si bien que le premier meuble (18) puisse être soulevé par le dispositif de levage (9) moyennant un fonctionnement du dispositif d'entraînement (12).

10. Dispositif (1) selon la revendication 9, **caractérisé en ce que** les moyens d'actionnement mécaniques (11) du dispositif de levage (9) sont des éléments à câble, de préférence des moyens de traction de câble.

11. Dispositif (1) selon l'une des revendications 9 ou 10, **caractérisé en ce que** le dispositif de levage (9) comprend au moins deux rails de guidage (16) disposés latéralement au bâti porteur (2) et associés, chacun, à un élément de saisie (10), chaque élément de saisie (10) étant guidé nécessairement par le rail de guidage (16) associé, lesdits au moins deux éléments de saisie (10) étant en liaison d'actionnement avec le dispositif d'entraînement (12).

12. Dispositif (1) selon la revendication 11, **caractérisé en ce que** lesdits au moins deux éléments de saisie (10) sont montés pivotant sur le rail de guidage (16) associé.

13. Dispositif (1) selon l'une des revendications 9 à 12, **caractérisé en ce que** le dispositif (2) comprend au moins deux groupes (19, 21) d'au moins deux éléments de saisie (10), les deux groupes pouvant être actionnés indépendamment l'un de l'autre, si bien le dispositif (1) puisse soulever au moins deux meubles (18, 20, 22).

14. Dispositif (1) selon l'une des revendications 9 à 13, **caractérisé en ce que** le dispositif (1) comprend un dispositif de stockage d'énergie (14) pour le fonctionnement du dispositif d'entraînement (12).

15. Dispositif (1) selon l'une des revendications précédentes, **caractérisé en ce que** le dispositif (1) comprend un habillage extérieur entourant le dispositif (1) par zone.

16. Dispositif (1) selon l'une des revendications précédentes, **caractérisé en ce que** le dispositif (1) est adapté à une utilisation pour des lits d'hôpital.

17. Dispositif (1) selon l'une des revendications précédentes, **caractérisé en ce que** le dispositif (1) ne dépasse pas une hauteur maximale de 1,9 mètres, une largeur maximale de 1,1 mètres et une longueur maximale de 2,3 mètres.
